# DEMANDE DE BREVET EUROPEEN

(11) **EP 1 428 864 A1**
(43) Date de publication de la demande: **16.06.2004**
(21) Numéro de dépôt: 03292894.7
(22) Date de dépôt: 20.11.2003
(51) Int. Cl.: C10L 3/10, B01D 53/14

(54) **Procédé de désacidification et de déshydratation d'un gaz naturel**

(30) Priorité: 10.12.2002 FR 0215569
(71) Demandeur: Institut Français du Pétrole, 92852 Rueil-Malmaison Cedex (FR)
(72) Inventeur: Minkkinen, Ari, 78860 Saint-Nom-La Bretèche (FR); Rojey, Alexandre, 92500 Rueil-Malmaison (FR); Lecomte, Fabrice, 75020 Paris (FR)

(57) **Abrégé**

Le gaz naturel est désacidifié par mise en contact dans la zone 3 avec un solvant contenant de l'amine en solution aqueuse. Puis, le gaz est déshydraté par mise en contact dans la zone 4 avec un solvant très riche en amine. Après les opérations de mise en contact, le solvant chargé en H₂S et en eau est détendu dans le ballon 9, puis régénéré dans la colonne 11. Une partie du solvant régénéré est envoyé dans la zone 3. Une autre partie du solvant régénéré est distillé sous vide dans la colonne 18 de manière à produire un solvant riche en amine qui est envoyé dans la zone 4.

## Description

La présente invention a trait au domaine du traitement d'un gaz naturel issu d'un puits de production pétrolière. Elle propose un procédé de désacidification et de déshydratation d'un gaz naturel.

Lors de la production d'un gaz naturel destiné à la commercialisation, la nécessité de réduire la teneur en hydrogène sulfuré (H₂S) à quelques parties par million est essentielle pour des raisons de sécurité. Le dioxyde de carbone (CO₂) n'étant pas un poison, il peut être toléré à des teneurs volumiques de quelques pourcents. La teneur en CO₂ est uniquement limitée par des considérations de capacité calorifique du gaz et de perte de charge dans les pipelines. La nécessité de déshydrater le gaz naturel est nécessaire pour éviter la corrosion des pipelines et/ou pour éviter les bouchons d'hydrates et de glace.

Des procédés de l'art antérieur proposent d'extraire les gaz acides (H₂S et CO₂) par un traitement utilisant un solvant contenant des amines, par exemple la méthyldiéthanolamine (MDEA) qui possède une très grande affinité avec l'H₂S.

Les amines utilisées par les procédés de traitement de gaz naturel sont en solutions aqueuses notamment pour modifier les équilibres chimiques, pour réduire les pertes de vapeurs, pour réduire la température de régénération à pression atmosphérique et pour limiter la co-absorption d'hydrocarbures. Le fait que les amines soient en solutions aqueuses ne permet pas de déshydrater le gaz à traiter et présente le désavantage d'humidifier un gaz qui serait intrinsèquement sec ou qui aurait déjà été déshydraté. En général, après désacidification avec un procédé utilisant un solvant aux amines, le gaz naturel doit être déshydraté par un traitement supplémentaire utilisant un solvant à base de glycol. La nécessité d'utiliser un traitement supplémentaire pour déshydrater un gaz naturel désacidifié par un procédé utilisant un solvant contenant des amines est coûteux et impose une infrastructure supplémentaire.

La présente invention propose un procédé de désacidification et de déshydratation mettant en ceuvre un solvant contenant de l'amine et évitant les inconvénients de l'art antérieur.

De manière générale, la présente invention concerne un procédé de traitement d'un gaz naturel comportant de l'H₂S, dans lequel on effectue les étapes:
a) on met en contact ledit gaz naturel avec un premier solvant comprenant de l'amine de manière à obtenir un gaz appauvri en H₂S et un solvant chargé en H₂S,
b) on met en contact le gaz appauvri en H₂S obtenu à l'étape a) avec un deuxième solvant comprenant au moins 90 % en poids d'amine de manière à obtenir un gaz appauvri en eau et un solvant chargé en eau.

Selon l'invention, à l'étape a), le premier solvant peut comporter entre 20 % et 95 % en poids d'amine et, dans lequel à l'étape b), le deuxième solvant peut comporter au moins 95 % en poids d'amine. Le solvant chargé en H₂S obtenu à l'étape a) et le solvant chargé en eau obtenu à l'étape b) peuvent être régénérés par un unique circuit de régénération.

Selon l'invention, à l'étape a), on peut mettre en contact ledit gaz naturel avec le premier solvant comprenant de l'amine et de l'eau et avec le solvant chargé en eau obtenue à l'étape b), et on peut effectuer l'étape :
c) on distille le solvant chargé en H₂S obtenu à l'étape a) pour obtenir une première vapeur d'eau chargée en H₂S et un solvant régénéré, une première partie dudit solvant régénéré étant recyclé à l'étape a) en tant que premier solvant,
ainsi que l'une des étapes d) suivantes :
d) on distille, en présence d'hydrocarbures comportant plus de cinq atomes de carbone, une deuxième partie du solvant régénéré obtenu à l'étape c) de manière à obtenir une deuxième vapeur d'eau et ledit deuxième solvant, comportant au moins 90 % d'amine, utilisé à l'étape b), ou
d) on distille sous une pression inférieure à la pression atmosphérique une deuxième partie du solvant régénéré obtenu à l'étape c) de manière à obtenir une deuxième vapeur d'eau et ledit deuxième solvant, comportant au moins 90 % d'amine, utilisé à l'étape b).

Le procédé selon l'invention peut également comporter les étapes:
c) on distille le solvant chargé en H₂S obtenu à l'étape a) et le solvant chargé en eau obtenu à l'étape b) de manière à obtenir une première vapeur d'eau chargée en H₂S et un solvant régénéré, une première partie dudit solvant régénéré étant recyclé à l'étape a) en tant que premier solvant,
d) on distille sous une pression inférieure à la pression atmosphérique une deuxième partie du solvant régénéré obtenu à l'étape c) de manière à obtenir une deuxième vapeur d'eau et ledit deuxième solvant, comportant au moins 90 % d'amine, utilisé à l'étape b).

Selon l'invention, à l'étape b) la deuxième partie peut constituer entre 1 % et 50 % en poids dudit solvant régénéré obtenu à l'étape c). Avant l'étape c), on peut détendre ledit solvant chargé en H₂S obtenu à l'étape a) afin de libérer de l'H₂S.

Dans le cas où l'on effectue une distillation sous vide à l'étape d), à l'étape c) on peut distiller dans une première colonne de distillation, à l'étape d) on peut distiller dans une deuxième colonne de distillation et on peut effectuer les étapes suivantes:
e) on refroidit la deuxième vapeur obtenue à l'étape d) pour obtenir une phase aqueuse liquide et une troisième vapeur contenant de l'H₂S,
f) on introduit une première partie de ladite phase aqueuse obtenue à l'étape e) en tête de la première colonne et on introduit une deuxième partie dudit liquide obtenu à l'étape e) en tête de la deuxième colonne.

Dans le cas où l'on effectue une distillation en présence d'hydrocarbures à l'étape d), à l'étape c) on peut distiller dans une première colonne de distillation, à l'étape d) on peut distiller dans une deuxième colonne de distillation et on peut effectuer les étapes suivantes:
e) on refroidit la deuxième vapeur obtenue à l'étape d) pour obtenir une phase aqueuse liquide, des hydrocarbures liquides et une troisième vapeur contenant de l'H₂S,
f) on introduit une partie de ladite phase aqueuse obtenue à l'étape e) en tête de la deuxième colonne et on introduit une partie desdits hydrocarbures obtenus à l'étape e) en fond de la deuxième colonne.

Le procédé selon l'invention peut comporter l'une des étapes :
g) on aspire la troisième vapeur obtenue à l'étape e) au moyen d'un éjecteur à vapeur d'eau de manière à obtenir un flux contenant de l'eau et de l'H₂S, ledit flux étant introduit dans la première colonne, ou
j) on aspire la troisième vapeur obtenue à l'étape e) au moyen d'une pompe à vide.

Le procédé selon l'invention peut comporter les étapes:
h) on refroidit la première vapeur obtenue à l'étape c) pour obtenir un deuxième liquide contenant de l'eau et une quatrième vapeur contenant de l'H₂S,
i) on introduit une partie du deuxième liquide obtenu à l'étape h) en tête de la première colonne.

Selon l'invention, l'amine peut être choisie dans le groupe comportant la méthyldiéthanolamine et la diméthyléthanolamine.

Le procédé selon la présente invention présente l'avantage de réaliser la désacidification et la déshydratation d'un gaz naturel avec un unique solvant comportant des amines circulant dans un unique circuit. Le gaz traité par le procédé selon l'invention ne nécessite pas de traitement ultérieur de déshydratation. Cela permet de réaliser des économies financières, ainsi que des gains de place.

D'autres caractéristiques et avantages de l'invention seront mieux compris et apparaîtront clairement à la lecture de la description faite ci-après à titre d'exemple en se référant aux dessins parmi lesquels :
- la figure 1 représente schématiquement un procédé selon l'invention,
- les figures 2 et 3 représentent schématiquement des variantes du procédé selon l'invention.

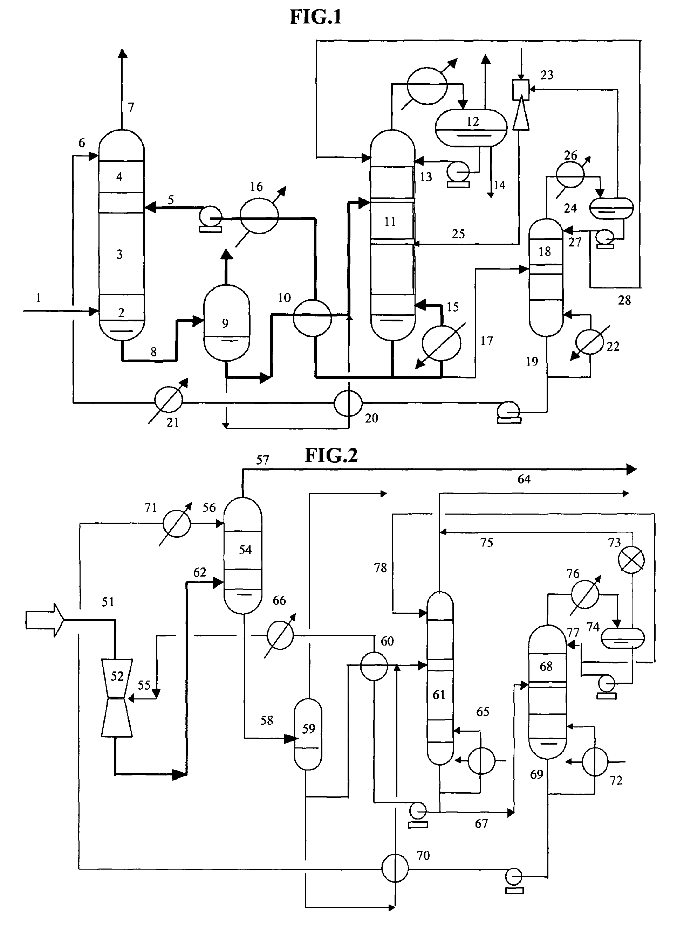

Sur la figure 1, le gaz naturel contenant de l'eau et des composés acides tels l'H₂S et le CO₂ arrive par le conduit 1 dans la colonne d'absorption 2. La colonne 2 comporte deux zones d'absorption 3 et 4. Les zones 3 et 4 peuvent être superposées dans une colonne. Les zones d'absorption 3 et 4 peuvent également être disposées dans deux colonnes différentes. La première zone d'absorption 3 permet d'extraire les composés acides (H₂S et éventuellement CO₂), la deuxième zone d'adsorption 4 permet de déshydrater et éventuellement d'effectuer une désacidification ultime du gaz. Le gaz arrivant par le conduit 1 est mis en contact à contre-courant dans la zone 3 avec un solvant régénéré introduit par le conduit 5. Le solvant consiste en une solution aqueuse d'amine qui permet d'absorber les composés acides (H₂S et éventuellement CO₂) contenus dans le gaz naturel. En tête de la zone 3, on obtient un gaz désacidifié et saturé en eau qui est ensuite introduit dans la zone 4. Le solvant chargé en composés acides (H₂S et éventuellement CO₂), récupéré en fond de la zone 3 est évacué par le conduit 8. Le gaz introduit dans la zone 4 est mis en contact à contre-courant avec un solvant introduit par le conduit 6. Le solvant arrivant par le conduit 6 est riche en amine, c'est à dire qu'il comporte au moins 90 % et de préférence plus de 95 % ou 98 % en poids d'amine. La nature hygroscopique et la grande capacité de solubilité de l'eau dans des amines anhydres permettent au solvant riche en amine d'absorber l'eau contenue dans le gaz. Dans la zone 4, le solvant riche en amine permet également d'absorber les composés acides (H₂S et éventuellement du CO₂) restant dans le gaz. Le gaz sortant en tête de la zone d'absorption 4 par le conduit 7 est désacidifié et déshydraté selon les normes imposées par son utilisation ultérieure. Le solvant récupéré en fond de la zone d'adsorption 4 est composé d'amine, d'eau et éventuellement de traces d'H₂S ou de CO₂. Il peut être directement introduit en tête de la zone d'absorption 3.

La colonne d'absorption peut comporter des zones supplémentaires d'absorption des gaz acides. Les zones d'absorption peuvent être disposées dans une colonne unique ou dans des colonnes différentes. Les zones d'absorption peuvent comporter différents types de plateaux et/ou de garnissages, en vrac et/ou structurés. Les zones d'absorption peuvent également consister en un contacteur mélangeur opérant à co-courrant tel que celui décrit par le brevet US 6,284,024.

Le solvant circulant dans le conduit 8 est détendu, puis introduit dans le ballon flash 9. Des composés acides (H₂S et CO₂) et des hydrocarbures libérés par la détente du solvant sont évacués en tête du ballon 9. La partie liquide du solvant détendu est évacuée en fond du ballon 9, chauffée par échange de chaleur dans l'échangeur 10 et/ou 20, puis introduite dans la colonne de régénération 11. Dans la colonne 11, les composés acides (H₂S et CO₂) sont extraits de la solution aqueuse d'amine. Le flux de vapeur généré par le rebouilleur 15 au fond de la colonne 11 extrait par entraînement, c'est à dire par "stripping", les composés acides. La vapeur issue en tête de la colonne 11 est chargée en composés acides. Elle est condensée par refroidissement dans un échangeur de chaleur, puis introduite dans le ballon 12. Les gaz acides sont évacués en tête du ballon 12. Une partie de l'eau condensée est introduite par le conduit 13 en tête de la colonne 11 à titre de reflux. L'eau restante est évacuée par le conduit 14. Ceci constitue un avantage supplémentaire: le procédé selon l'invention ne nécessite pas d'appoint d'eau pure pour fonctionner. Au contraire, il faut évacuer une quantité d'eau qui est fonction du taux d'humidité du gaz naturel arrivant par le conduit 1. Le solvant régénéré, c'est à dire débarrassé des composés acides est disponible, en fond de la colonne 11. Il peut consister en une solution aqueuse comportant entre 20 % et 95 % en poids d'amine, de préférence entre 20 % et 80 % en poids d'amine. Une première partie du solvant régénéré, par exemple entre 50 % et 99 % poids du solvant issu du fond de la colonne 11, est refroidie par échange de chaleur dans les échangeurs 10 et 16, puis est introduite par le conduit 5 en tête de la zone d'absorption 3.

Une deuxième partie du solvant régénéré, par exemple entre 1 % et 50 % poids du solvant issu du fond de la colonne 11, est introduite par le conduit 17 dans la colonne de distillation sous vide 18. La colonne 18 est maintenue à une pression inférieure à la pression atmosphérique, de préférence à une pression inférieure à 0,09 MPa ou 0,04 MPa. Le rebouilleur 22 permet de chauffer le solvant en fond de la colonne 18 afin d'extraire l'eau de l'amine par vaporisation. La vapeur d'eau, ainsi que les traces résiduelles de composés acides sont évacuées en tête de la colonne 18. Un solvant substantiellement débarrassé de l'eau et des composés acides est évacué en fond de la colonne 18 par le conduit 19, puis refroidi par les échangeurs de chaleur 20 et 21, et introduit par le conduit 6 en tête de la zone d'adsorption 4.

La vapeur d'eau évacuée en tête de la colonne 18 est en partie condensée par refroidissement dans l'échangeur de chaleur 26. Dans le ballon 24, l'eau liquide est séparée du gaz comportant de l'H₂S et du CO₂. Une partie de l'eau liquide est envoyée par le conduit 27 en tête de la colonne 18 à titre de reflux, une autre partie de l'eau liquide est envoyée par le conduit 28 en tête de la colonne 11 à titre de reflux. Le gaz contenu dans le ballon 24 est aspirée au moyen de l'éjecteur 23 utilisant un flux de vapeur d'eau moyenne pression. Ainsi, l'éjecteur 23 maintient sous vide la colonne 18. Le flux évacué de l'éjecteur 23 est introduit dans la colonne 11 par le conduit 25. Le point d'introduction du conduit 25 dans la colonne 11 est choisi de manière à pouvoir séparer les composés H₂S et CO₂. De plus, la vapeur introduite par le conduit 25 sert à entraîner les composés acides de la même façon que le flux de vapeur généré par le rebouilleur 15.

Le procédé schématisé par la figure 2 est adapté au traitement d'un gaz sur une plate-forme offshore, le gaz naturel contenant de l'eau et des composés acides tels l'H₂S et le CO₂ arrive par le conduit 51 dans le contacteur compact 52. Le contacteur 52 peut être horizontal ou vertical, par exemple un contacteur commercialisé par la société ProPure et décrit dans le document US 6,284,024. Dans le contacteur 52, le gaz naturel est mis en contact à co-courant avec un solvant arrivant par le conduit 55 de manière à adsorber l'H₂S autant que possible. Le temps de mise en contact entre le gaz naturel et le solvant est très court, par exemple entre 50 ms et 5 s, de manière à effectuer une absorption très sélective de l'H₂S et à absorber très peu de CO₂. Le mélange de solvant liquide et de gaz issu du contacteur 52 est introduit dans la colonne d'absorption 54 par l'intermédiaire du conduit 62. Le solvant liquide chargé en H₂S est récupéré en fond de la colonne 54, puis évacué par le conduit 58.

Dans la colonne 54, le gaz saturé en vapeur d'eau est mis en contact à contre-courant avec un solvant arrivant par le conduit 56. Le solvant riche en amine ne contient pas ou très peu d'eau et d'H₂S. Le solvant contient au moins 90 % poids d'amine, de préférence plus de 95 % ou 98 % poids d'amine. Le solvant riche en amine permet de capter l'eau du gaz de par la nature hygroscopique des amines et la grande capacité de solubilité de l'eau dans des amines anhydres. Le solvant captant l'eau absorbe également les traces restantes d'H₂S du gaz issu du contacteur 52 et permet ainsi d'obtenir un gaz naturel ayant une teneur en H₂S requise pour le transport par pipeline (environ moins de 3ppm d'H₂S). Le gaz évacué par le conduit 57 en tête de la colonne 54 est désacidifié et déshydraté. Le solvant chargé en eau est récupéré au fond de la colonne 54. Il est évacué, avec le solvant liquide provenant du conduit 62, par le conduit 58.

Le solvant circulant dans le conduit 58 est détendu dans le ballon flash 59 pour libérer des gaz acides et des hydrocarbures évacués en tête du ballon 59. Le solvant liquide issu du fond du ballon 59 est chauffé dans l'échangeur de chaleur 60 et/ou 70, puis introduit dans la colonne de régénération 61. Un reflux d'eau est introduit par le conduit 78 en tête de la colonne 61. Le flux de vapeur généré par le rebouilleur 65 au fond de la colonne 61 extrait par entraînement, c'est à dire par "stripping", les composés acides (H₂S et CO₂). La vapeur d'eau chargée en composés acides est évacuée en tête de colonne 61 par le conduit 64 par exemple vers un incinérateur. Le solvant régénéré en fond de colonne 61 contient des amines, de l'eau et est débarrassé des composés acides. Il contient entre 20 % et 95 % en poids d'amine, de préférence entre 20 % et 80 % en poids d'amine. Une première partie du solvant régénéré, par exemple entre 50 % et 99 % en poids du solvant issu du fond de la colonne 61, est refroidie par échange de chaleur dans l'échangeur 60 avec le solvant issu du fond du ballon 59, puis refroidie dans l'échangeur 66, puis introduite par le conduit 55 dans le contacteur 52.

Une deuxième partie du solvant régénéré, par exemple entre 1 % et 50 % poids du solvant issu du fond de la colonne 61, est introduite par le conduit 67 dans la colonne de distillation sous vide 68. La colonne 68 est maintenue sous vide à une pression inférieure à la pression atmosphérique, de préférence inférieure à 0,09 MPa ou 0,04 MPa. Le rebouilleur 72 permet de chauffer le solvant en fond de la colonne 68 afin d'extraire l'eau par vaporisation. La vapeur d'eau, ainsi que les traces résiduelles de composés acides sont évacuées en tête de la colonne 68. Un solvant substantiellement débarrassé de l'eau et des composés acides est évacué en fond de la colonne 68 par le conduit 69, puis refroidi par les échangeurs de chaleur 70 et 71, et introduit par le conduit 56 en tête de la colonne d'absorption 54.

La vapeur d'eau évacuée en tête de la colonne 68 est en partie condensée par refroidissement dans l'échangeur de chaleur 76. Dans le ballon 74, l'eau liquide est séparée du gaz comportant de l'H₂S et du CO₂. Une partie de l'eau liquide est envoyée par le conduit 77 en tête de la colonne 68 à titre de reflux, une autre partie de l'eau liquide est envoyée par le conduit 78 en tête de la colonne 61 à titre de reflux. Le gaz contenu dans le ballon 74 est aspiré au moyen de la pompe à vide 73, puis évacué par les conduits 75 et 64.

Une huile chaude disponible sur une plate-forme offshore peut être utilisée comme source de chaleur par les rebouilleurs 65 et 72.

Le solvant mise en oeuvre par le procédé selon l'invention peut comporter une amine choisie parmi les alkanolamines tertiaires du type R'R"R"'N où R' peut être un groupe méthyle ou éthyle, R" peut être un groupe méthyle, éthyle ou un alcool et R"' est un alcool. De préférence, on utilise un solvant contenant de la méthyldiéthanolamine (MDEA) et/ou de la diméthyléthanolamine (DMEA) car ces amines présentent une faible viscosité (la viscosité d'une solution de 100% de MDEA à 40°C est de 0,03 Pa.s) qui facilite la mise en contact du solvant avec le gaz à traiter, notamment dans la zone d'absorption 4 de la figure 1 et dans la colonne d'absorption 54 de la figure 2.

Le tableau ci après donne un bilan de matière du fonctionnement du procédé schématisé par la figure 1. On donne la température T en °C, la pression P en MPa et la composition en CO2, H2S, H2O, N2, C1, C2, C3, iC4, nC4, iC5, nC5, nC6, nC7, nC8, MDEA en kmol/h des fluides circulant dans différents conduits.

| No de conduit | 1 | 7 | 6 | 5 |
|---|---|---|---|---|
| | | | | |
| T | 44 | 51 | 50,4 | 50,4 |
| P | 7 | 7 | 7 | 7 |
| | | | | |
| C02 | 240,67 | 15,87 | | 22,33 |
| H2S | 1474,07 | 0,01 | | 105,82 |
| H2O | 9,71 | 0,82 | 32,08 | 24118,93 |
| N2 | 61,42 | 61,17 | | |
| C1 | 4073,55 | 4018,93 | | |
| C2 | 795,29 | 780,85 | | |
| C3 | 453,94 | 449,60 | | |
| iC4 | 57,25 | 56,61 | | |
| nC4 | 111,41 | 110,29 | | |
| iC5 | 29,74 | 29,48 | | |
| nC5 | 24,16 | 23,96 | | |
| nC6 | 6,26 | 6,18 | | |
| nC7 | 0,73 | 0,70 | | |
| nC8 | 0,41 | 0,40 | | |
| MDEA | 0,00 | 0,00 | 302,71 | 2727,48 |
| | | | | |
| Total | 7338,62 | 5554,87 | 334,79 | 26974,57 |

Pour obtenir le bilan de matière présenté dans le tableau, le fond de la colonne 11 est maintenu à une température de 128,7°C et à une pression de 0,24 MPa absolu, le fond de la colonne 18 est maintenu à une température de 100°C et à une pression de 0,01 MPa absolu.

De manière générale, les zones d'absorptions 3, 4 et 54 et le contacteur 52 peuvent fonctionner à une pression supérieure à 3 MPa absolu et à une température comprise entre 0°C et 80°C. Les colonnes de régénération 11 et 61 peuvent fonctionner à basse pression, c'est à dire à une pression inférieure à 1 MPa absolu. Les températures des colonnes de régénération 11 et 61, et des colonnes de distillation 18 et 68 ne doivent pas dépasser la température de dégradation de l'amine composant le solvant. On peut, par exemple, maintenir les colonnes 11, 61, 18 et 61 à une température inférieure à 140°C.

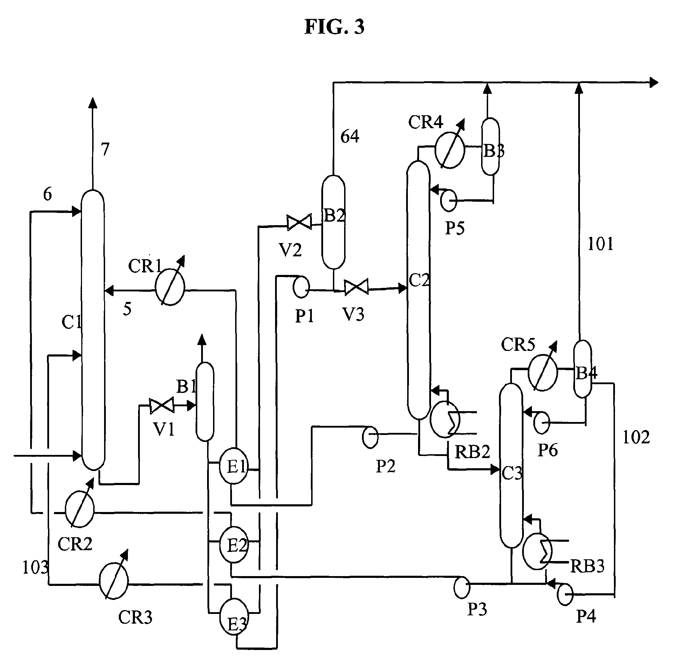

La figure 3 schématise une variante du procédé de régénération du solvant chargé en composés acides (H₂S et/ou CO₂) et en eau.

Le gaz naturel introduit dans la colonne d'absorption C1 par le conduit 1 est traité de la même manière que dans la colonne 2 schématisée par la figure 1.

Le solvant issu du fond de la colonne C1 est détendu à travers la vanne V1 de manière à libérer dans le ballon B1 une partie des hydrocarbures co-absorbés. Les hydrocarbures sont évacués en tête du ballon B1. Le solvant issu en fond du ballon B1 est appauvri en hydrocarbures. Il est refroidi dans les échangeurs de chaleur E1, E2 et/ou E3, puis détendu à travers la vanne V2 de manière à libérer des gaz acides (H₂S et/ou CO₂), puis introduit dans le ballon B2. Les gaz acides sont évacués en tête du ballon B2 par le conduit 64. Le solvant en fond du ballon B2 est appauvri en composés acides.

Une première partie du solvant issu du fond du ballon B2 peut être envoyée par l'intermédiaire de la pompe P1 et après refroidissement dans les échangeurs de chaleur E3 puis CR3 (échange avec un milieu ambiant tel l'eau ou l'air) dans la colonne d'absorption C1. Le point d'introduction de cette première partie de solvant dans la colonne C1 peut être situé entre le fond de C1 et le point d'introduction du conduit 5 dans C1. Une deuxième partie du solvant issu du fond du ballon B2 est détendue à une pression proche de la pression atmosphérique, par exemple à une pression comprise entre 0,1 MPa et 1 MPa absolu, puis est introduite dans la colonne de régénération C2.

Le solvant est distillé dans la colonne C2. La vapeur d'eau chargée en composés acides obtenue en tête de la colonne C2 est en partie condensée par refroidissement dans l'échangeur de chaleur CR4. Les gaz acides sont évacués en tête du ballon B3, le condensat est envoyé en tête de la colonne C2 par la pompe P5. Le rebouilleur RB2 permet de chauffer le solvant au fond de la colonne C2. Le solvant régénéré obtenu en fond de la colonne C2 peut comporter entre 20 % et 95 % en poids d'amine, de préférence entre 20 % et 80 % en poids d'amine.

Une première partie du solvant régénéré obtenu en fond de la colonne C2 est refroidie dans les échangeurs de chaleur E1 et CR1, puis envoyée par l'intermédiaire de la pompe P2 et du conduit 5 dans la colonne C1.

Une deuxième partie du solvant régénéré obtenu en fond de la colonne C2 est introduite dans la colonne de purification C3. La colonne C3 permet de séparer l'eau de l'amine par strippage à l'aide par exemple d'une essence légère, c'est à dire que l'essence vaporisée entraîne l'eau en tête de la colonne C3. L'essence légère peut être composée d'hydrocarbures comportant plus de cinq atomes de carbone. Un rebouilleur chauffe le solvant en fond de la colonne C3. La colonne C3 peut opérer à une pression voisine de la colonne C2, c'est à dire à une pression comprise entre 0,1 MPa et 1 MPa absolu. La vapeur obtenue en tête de la colonne C3 comporte au moins de l'essence, de l'eau et des composés acides. Elle est refroidie dans l'échangeur de chaleur CR5, puis introduite dans le ballon B4. Les gaz acides sont évacués en tête du ballon B4 par le conduit 101. La phase aqueuse obtenue en fond du ballon B4 est introduite en tête de la colonne C3. Les hydrocarbures liquides obtenus dans le ballon B4 sont introduits en fond de la colonne C3 par l'intermédiaire de la pompe P4 et du conduit 102, par exemple après avoir été vaporisés par le rebouilleur RB3. Il est possible d'introduire un appoint d'essence légère dans le conduit 102. Le solvant purifié obtenu en fond de la colonne C3 est refroidi dans les échangeurs de chaleurs E2 et CR2, puis introduit en tête de la colonne d'absorption C1 par l'intermédiaire de la pompe P3 et du conduit 6.

Sans sortir du cadre de l'invention, la colonne C3 peut être remplacée par un module de pervaporation. La phase aqueuse est alors transférée en phase vapeur à travers une membrane, puis condensée, tandis que la phase amine est concentrée.

## Revendications

1. Procédé de traitement d'un gaz naturel comportant de l'H₂S, dans lequel on effectue les étapes:
a) on met en contact ledit gaz naturel avec un premier solvant comprenant de l'amine de manière à obtenir un gaz appauvri en H₂S et un solvant chargé en H₂S,
b) on met en contact le gaz appauvri en H₂S obtenu à l'étape a) avec un deuxième solvant comprenant au moins 90 % en poids d'amine de manière à obtenir un gaz appauvri en eau et un solvant chargé en eau.

2. Procédé selon la revendication 1, dans lequel à l'étape a) le premier solvant comporte entre 20 % et 95 % en poids d'amine et dans lequel à l'étape b) le deuxième solvant comporte au moins 95 % en poids d'amine.

3. Procédé selon l'une des revendications 1 et 2, dans lequel le solvant chargé en H₂S obtenu à l'étape a) et le solvant chargé en eau obtenu à l'étape b) sont régénérés par un unique circuit de régénération.

4. Procédé selon l'une des revendications 1 et 2, dans lequel à l'étape a), on met en contact ledit gaz naturel avec le premier solvant comprenant de l'amine et de l'eau et avec le solvant chargé en eau obtenue à l'étape b), et dans lequel on effectue l'étape:
c) on distille le solvant chargé en H₂S obtenu à l'étape a) pour obtenir une première vapeur d'eau chargée en H₂S et un solvant régénéré, une première partie dudit solvant régénéré étant recyclé à l'étape a) en tant que premier solvant.

5. Procédé selon la revendication 4, dans lequel on effectue l'étape:
d) on distille, en présence d'hydrocarbures comportant plus de cinq atomes de carbone, une deuxième partie du solvant régénéré obtenu à l'étape c) de manière à obtenir une deuxième vapeur d'eau et ledit deuxième solvant, comportant au moins 90 % d'amine, utilisé à l'étape b).

6. Procédé selon la revendication 4, dans lequel on effectue l'étape:
d) on distille sous une pression inférieure à la pression atmosphérique une deuxième partie du solvant régénéré obtenu à l'étape c) de manière à obtenir une deuxième vapeur d'eau et ledit deuxième solvant, comportant au moins 90 % d'amine, utilisé à l'étape b).

7. Procédé selon l'une des revendications 1 et 2, dans lequel on effectue les étapes:
c) on distille le solvant chargé en H₂S obtenu à l'étape a) et le solvant chargé en eau obtenu à l'étape b) de manière à obtenir une première vapeur d'eau chargée en H₂S et un solvant régénéré, une première partie dudit solvant régénéré étant recyclé à l'étape a) en tant que premier solvant,
d) on distille sous une pression inférieure à la pression atmosphérique une deuxième partie du solvant régénéré obtenu à l'étape c) de manière à obtenir une deuxième vapeur d'eau et ledit deuxième solvant, comportant au moins 90 % d'amine, utilisé à l'étape b).

8. Procédé selon l'une des revendications 4 à 7, dans lequel à l'étape b) ladite deuxième partie constitue entre 1 % et 50 % en poids dudit solvant régénéré obtenu à l'étape c).

9. Procédé selon l'une des revendications 4 à 8, dans lequel avant l'étape c), on détend ledit solvant chargé en H₂S obtenu à l'étape a) afin de libérer de l'H₂S.

10. Procédé selon l'une des revendications 6 et 7, dans lequel à l'étape c) on distille dans une première colonne de distillation, dans lequel à l'étape d) on distille dans une deuxième colonne de distillation et dans lequel on effectue les étapes suivantes:
e) on refroidit la deuxième vapeur obtenue à l'étape d) pour obtenir une phase aqueuse liquide et une troisième vapeur contenant de l'H₂S,
f) on introduit une première partie de ladite phase aqueuse obtenue à l'étape e) en tête de la première colonne et on introduit une deuxième partie dudit liquide obtenu à l'étape e) en tête de la deuxième colonne.

11. Procédé selon la revendication 5, dans lequel à l'étape c) on distille dans une première colonne de distillation, dans lequel à l'étape d) on distille dans une deuxième colonne de distillation et dans lequel on effectue les étapes suivantes:
e) on refroidit la deuxième vapeur obtenue à l'étape d) pour obtenir une phase aqueuse liquide, des hydrocarbures liquides et une troisième vapeur contenant de l'H₂S,
f) on introduit une partie de ladite phase aqueuse obtenue à l'étape e) en tête de la deuxième colonne et on introduit une partie desdits hydrocarbures obtenus à l'étape e) en fond de la deuxième colonne.

12. Procédé selon la revendication 10, dans lequel on effectue l'étape:
g) on aspire la troisième vapeur obtenue à l'étape e) au moyen d'un éjecteur à vapeur d'eau de manière à obtenir un flux contenant de l'eau et de l'H₂S, ledit flux étant introduit dans la première colonne.

13. Procédé selon l'une des revendications 10 à 12, dans lequel on effectue les étapes:
h) on refroidit la première vapeur obtenue à l'étape c) pour obtenir un deuxième liquide contenant de l'eau et une quatrième vapeur contenant de l'H₂S,
i) on introduit une partie du deuxième liquide obtenu à l'étape h) en tête de la première colonne.

14. Procédé selon la revendication 10, dans lequel on effectue l'étape:
j) on aspire la troisième vapeur obtenue à l'étape e) au moyen d'une pompe à vide.

15. Procédé selon l'une des revendications 1 à 14, dans lequel l'amine est choisie dans le groupe comportant la méthyldiéthanolamine et la diméthyléthanolamine.
